# EUROPEAN PATENT APPLICATION

(11) **EP 4 484 688 A1**
(43) Date of publication of application: **01.01.2025**
(21) Application number: 24168386.1
(22) Date of filing: 04.04.2024
(51) Int. Cl.: E05D 11/06, E05C 17/00, E05F 5/04, E05F 5/06

(54) **DOOR STOP APPARATUS FOR HINGE MOUNTED DOORS**

(30) Priority: 28.06.2023 US 202318343200
(71) Applicant: The Boeing Company, Arlington, VA 22202 (US)
(72) Inventor: MANGUM, Lee, Marvin, ARLINGTON, 22202 (US); MORLEY, Mitchell, Lynn, ARLINGTON, 22202 (US); BRIDGEMAN, Paul, Thomas, ARLINGTON, 22202 (US); BEACH, Sean, Alexander, ARLINGTON, 22202 (US); WEBSTER, Daniel, ARLINGTON, 22202 (US)
(74) Representative: Plasseraud IP

(57) **Abstract**

A door stop apparatus for limiting opening movement of a hinge mounted door is disclosed. The door stop apparatus may comprise a body member comprising a first end surface and a second end surface opposite and parallel to the first end surface. The body member may also comprise a through-opening extending between the first end surface and the second end surface, wherein the through-opening is configured to receive the hinge pin of the door hinge. Further, the body member may comprise an abutment surface extending between the first end surface and the second end surface, wherein the abutment surface is configured to abut against the door hinge for maintaining the body member in a substantially fixed position relative to the door hinge. Additionally, the body member may comprise a first side surface extending between the first end surface and the second end surface.

## Description

### FIELD

The present disclosure relates generally to door stop apparatus and more particularly, to door stop apparatus for limiting the opening movement of hinge-mounted doors beyond a predefined angle.

### BACKGROUND

This background description is provided for the purpose of generally presenting the context of the disclosure. Unless otherwise indicated herein, material described in this section is neither expressly nor impliedly admitted to be prior art to the present disclosure or the appended claims.

Commercial aircraft are generally constructed from modular components, the size, weight, and construction of which are dictated by many considerations, including fuselage dimensions, aesthetic, and safety considerations. Typically, commercial aircraft include storage units for storing carry-on luggage and other items. While the storage units may take a variety of forms, storage units with swingable doors have been widely used on commercial aircraft and in other applications for a number of years. Such storage units may be mounted along the ceiling and sidewalls in the interior of the aircraft.

Various types of swingable doors have been used for the assembly of storage units. Typically, the doors are mounted on hinges that are attached to a frame or support of the storage unit. The doors may rotate about the hinges from an open position, extending at an angle from the frame supporting the door, to a closed position substantially flush with the frame that surrounds the door on four sides. For structural, aesthetic, or other reasons, continuous or "piano" hinges are traditionally used for supporting swingable doors in commercial aircrafts. However, when the doors are opened, the door (or door latch) may hit or collide with structures adjacent to the door (e.g., walls, door frames, trim, or other objects). Repeated impacts as a result of the collisions may damage the adjacent structures and/or the door.

There are many different arrangements or mechanisms used to act as a door stop or bumper to prevent damage to the door and/or adjacent structures (e.g., walls, door frames, trim, or other objects) that may result when the door is fully opened. The door stop may be designed to stop or limit the opening of a door at a particular angle to prevent a collision between the door and the structures adjacent to the door. Typically, a door stop is installed or mounted on a door frame or wall and is placed at a location such that the door will, if the door is opened too far, collide with the door stop and not the structures adjacent to the door. The door stop, often constructed of a soft material such as rubber or plastic, can absorb the force of the impact from the door to prevent the door and/or the adjacent structures from being damaged when the door is opened. In other arrangements, the door stop may be mounted on an outer surface of the door and operate in substantially the same manner as the frame and wall mounted door stops as described above.

However, these conventional door stops have several disadvantages and/or problems. For example, the door stops may require the structures adjacent to the door (e.g., walls, door frames, trim, or other objects) to be pre-fabricated to accommodate the doors stops which can increase installation costs. The door stops may also be required to be secured to the adjacent structures by special mounting hardware and tooling (e.g., special screws, washers, screwdrivers, and the like) which can be time consuming due to the number of door stops to be installed. As such, the door stops may not be easily removed, replaced, and/or relocated. In addition, the structures for mounting the door stops may need to be sufficiently strengthened to support the door stops.

Further, as the door stops are subjected to continuous use, the continued impact forces of the door against the door stops can partially loosen or completely uncouple the door stops from the adjacent structures and/or alter the orientation of the door stops. The loss or alteration of the door stops may render the door stops inoperable and/or may result in the door stops being relatively useless. As such, conventional door stops may be ineffective, leading to undesired damage of the door and/or adjacent structures. Further, these door stops may be composed of numerous parts and may be expensive, heavy, and unattractive. Therefore, there is a need for a relatively inexpensive, light weight, reliable door stop for limiting the opening movement of a hinge mounted door.

### SUMMARY

The present application is directed to door stop apparatus for hinge mounted doors. The door stop apparatus can be used to limit the degree or range of rotation of the door in an opening direction. For example, the door stop apparatus may limit the door from opening beyond a predefined or predetermined angle. As a result, the door stop apparatus can prevent the door from swinging into or contacting adjacent structures (e.g., walls, door frames, trim, or other objects), thereby avoiding collisions between the door and adjacent structures that may cause unwanted damage. Therefore, the door stop apparatus may protect the door and/or adjacent structures from undesired forces and/or damage when the door is opened.

The door stop apparatus may be fabricated for different types of door hinge configurations and readily sized in various lengths/heights. The door stop apparatus may also stop the movement of the door at a desired position without contacting or applying pressure to the adjacent structures. For example, the door stop apparatus may be configured to engage or interface with the door hinge to prevent axial or rotational movement of the door stop apparatus about the door hinge. As a result, the door stop apparatus may maintain a substantially fixed positioned relative to the door hinge to stop the movement of the door without contacting adjacent structures. Thus, the door stop apparatus may be configured to only contact a door hinge to limit the opening movement of the door.

The door stop apparatus may be fabricated with various configurations and sizes for limiting the opening of the door to different desired angles. The door stop apparatus may be of a relatively simple construction and inexpensive to manufacture. For example, the door stop apparatus may be fabricated from a single piece of material enabling the door stop apparatus to be long lasting and relatively trouble free in operation. The door stop apparatus may also be relatively light weight, compact, and aesthetically appealing to enhance the overall appearance of the door hinge. Further, the door stop apparatus may be pre-installed or pre-assembled on a door hinge thereby decreasing installation time. In addition, the door stop may be durable to absorb forces from impacts with a door. For example, a bumper or protective member may be coupled to the door stop apparatus for absorbing forces that may result from contact with the door.

In one aspect, a door stop apparatus is provided. The door stop apparatus is adapted to be coupled to a hinge pin of a door hinge for limiting opening movement of a door. The door stop apparatus comprises a body member having a first end surface and a second end surface opposite to the first end surface. The body member also comprises a housing extending between the first end surface and the second end surface, wherein the housing is configured to receive the hinge pin of the door hinge. Further, the body member comprises an abutment surface extending between the first end surface and the second end surface, wherein the abutment surface is configured to abut against the door hinge for maintaining the body member in a substantially fixed position relative to the door hinge. Additionally, the body member comprises a first side surface extending between the first end surface and the second end surface.

In another aspect, a modular component like a cabinet or storage unit of an aircraft is provided. This modular component has a hinge mounted door and further comprises a door stop apparatus for limiting the opening movement of a door as described here above. The door stop apparatus may comprise a bumper member disposed on the body member and the bumper member may be configured to absorb impact from the door. The door stop apparatus may limit opening movement of the door without contacting adj acent structures other than the door hinge.

The foregoing summary is illustrative only and is not intended to be in any way limiting. In addition to the illustrative aspects, embodiments, and features described above, further aspects, embodiments, and features will become apparent by reference to the figures and the following detailed description.

### BRIEF DESCRIPTION OF THE DRAWINGS

A more complete understanding of embodiments of the present application may be derived by referring to the detailed description and claims when considered in conjunction with the following figures, wherein like reference numbers refer to similar elements throughout the figures. The figures are provided to facilitate understanding of the disclosure without limiting the breadth, scope, scale, or applicability of the disclosure. The drawings are not necessarily made to scale.
FIG. 1 illustrates an example embodiment of an aircraft;
FIG. 2 illustrates a storage unit disposed within the aircraft of FIG. 1;
FIG. 3 is a partial front view of the storage unit of FIG. 2 showing a door stop apparatus coupled to a hinge of a door in a closed position;
FIG. 4 is a partial perspective view of the storage unit of FIG. 2 showing a door stop apparatus coupled to a hinge of a door disposed in a maximum opening position as limited by the door stop apparatus;
FIG. 5 is a front perspective view of a door stop apparatus for limited the opening movement of a door, according to an exemplary embodiment;
FIG. 6 is a top view of the door stop apparatus of FIG. 5;
FIG. 7 is a front perspective view of a door stop apparatus for limited the opening movement of a door, according to another exemplary embodiment;
FIG. 8 is a top view of the door stop apparatus of FIG. 7;
FIG. 9 is a back perspective view of the door stop apparatus of FIG. 7;
FIG. 10 is a front view of the door stop apparatus of FIG. 7 with the bumper member removed;
FIG. 11 is perspective view of a bumper member of the door stop apparatus of FIG. 7, according to an exemplary embodiment;
FIG. 12 is a top view of the bumper member of FIG. 11;
FIG. 13 is a partial top plan view of a door stop apparatus mounted on a door hinge of a door disposed in a maximum opening position as limited by the door stop apparatus;
FIG. 14 is a partial cross-sectional perspective view of a door stop apparatus mounted of FIG. 11 with the door disposed in a closed position;
FIG. 15 shows the partial cross-sectional perspective view of the door hinge of FIG. 14 with the door stop apparatus removed;
FIG. 16 is a front perspective view of a door stop apparatus for limited the opening movement of a door, according to another exemplary embodiment;
FIG. 17 is a front perspective view of a door stop apparatus for limited the opening movement of a door, according to another exemplary embodiment; and
FIG. 18 is a front perspective view of a door stop apparatus for limited the opening movement of a door, according to another exemplary embodiment.

### DETAILED DESCRIPTION

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

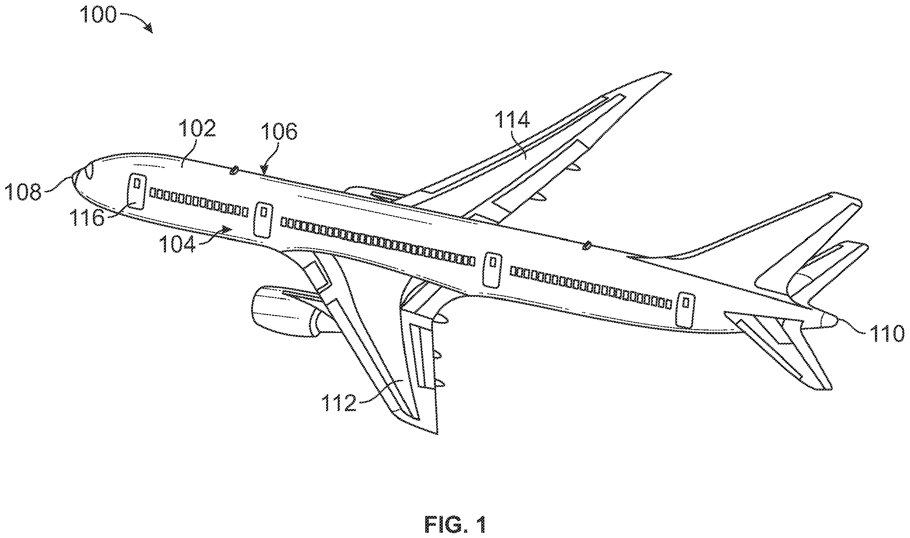

Particular implementations are described herein with reference to the drawings. In the description, common features are designated by common reference numbers throughout the drawings. In some drawings, multiple instances of a particular type of feature may be used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to Figure 1, hinges are illustrated and associated with reference number 223. When referring to a particular one of the hinges, such as the hinge 223A, the distinguishing letter "A" may be used. However, when referring to any arbitrary one of the hinges or to the hinges as a group, the reference number 223 may be used without a distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. Further, the terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

The present application is directed to embodiments that relate to door stop apparatus for hinge mounted doors. The door stop apparatus can be used to limit the degree or range of rotation of the door in an opening direction. For example, the door stop apparatus may limit the door from opening beyond a predefined or predetermined angle. As a result, the door stop apparatus can prevent the door from swinging into or contacting adjacent structures (e.g., walls, door frames, trim, or other objects), thereby avoiding collisions between the door and the adjacent structures that may cause unwanted damage. Therefore, the door stop apparatus may protect the door and/or adjacent structures from undesired forces and/or damage when the door is opened.

The door stop apparatus may also be fabricated for different types of door hinge configurations and readily sized in various lengths/heights. The door stop apparatus may also stop the movement of the door at a desired position without contacting or applying pressure to the adjacent structures. For example, the door stop apparatus may be configured to engage or interface with the door hinge to prevent axial or rotational movement of the door stop apparatus about the door hinge. As a result, the door stop apparatus may maintain a substantially fixed positioned relative to the door hinge to stop the movement of the door without contacting adjacent structures. Thus, the door stop apparatus may be configured to only contact a door hinge to limit the opening movement of the door.

The door stop apparatus may be fabricated in various configurations and sizes for limiting the opening movement of the door to different desired angles. For example, the door stop apparatus may limit the opening of the door to an angle between 90 to 140 degrees. The door stop apparatus may be of a relatively simple construction and inexpensive to manufacture. For example, the door stop apparatus may be fabricated from a single piece of material enabling the door stop apparatus to be long lasting and relatively trouble free in operation. The door stop apparatus may also be relatively light weight, compact, and aesthetically appealing to enhance the overall appearance of a door hinge. Further, the door stop apparatus may also be relatively easy to install and remove. For example, the door stop apparatus can be pre-installed or pre-assembled on a door hinge thereby decreasing installation time. In addition, the door stop apparatus may be durable to absorb forces from impacts with a door. For example, a bumper or protective member may be coupled to the door stop apparatus for absorbing forces that may result from contact with the door.

Referring now to the drawings, and more particularly to Figure 1, an exemplary embodiment of an aircraft 100 in which aspects of the present disclosure may be implemented. The aircraft 100 of Figure 1 includes a fuselage 102 having a left side 104, a right side 106, a nose end 108 and a tail end 110. A first wing 112 is coupled to the left side 104 of the fuselage 102. A second wing 114 is coupled to the right side 106 of the fuselage 102. In the illustrated example, the aircraft 100 includes a door 116 disposed on the left side 104 of the fuselage 102. Passengers and/or crew may enter (e.g., board) and/or exit (e.g., disembark) the aircraft 100 via the door 116. The aircraft 100 of Figure 1 is merely an example and, thus, other aircrafts may be used without departing from the scope of this disclosure.

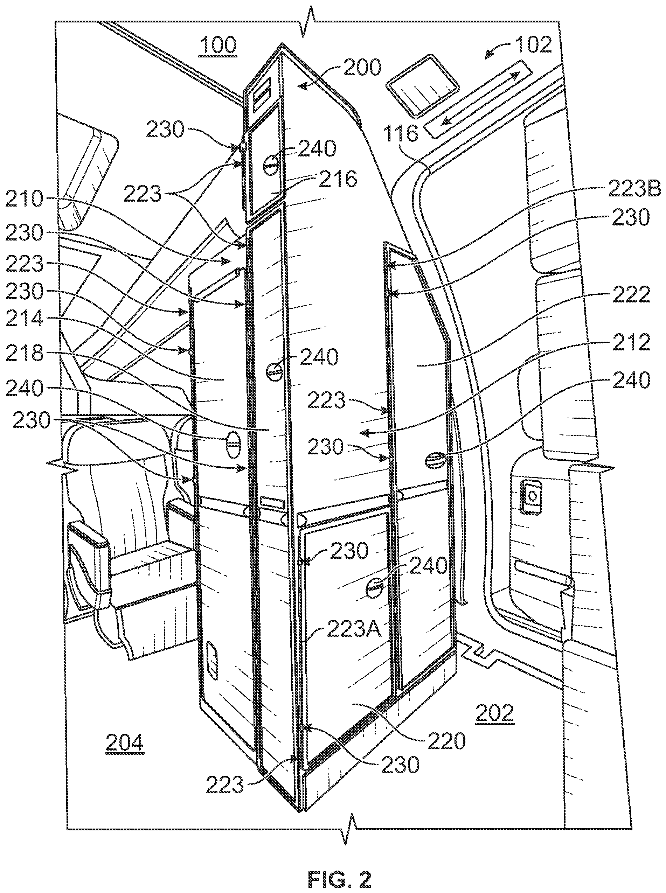

Figure 2 illustrates a storage unit 200 of the aircraft 100 of Figure 1. The storage unit 200 may be disposed near an entranceway 202 of the aircraft 100. For example, the storage unit 200 may be disposed adjacent a passageway or aisle 204 of a cabin or interior of the aircraft 100. In the illustrated example, the storage unit 200 is disposed on a right side of the passageway or aisle 204 adjacent the entranceway 202 of the aircraft 100 and/or the door 116 from a perspective of the passengers and/or the crew when the passengers and/or the crew enter the aircraft 100 via the door 116. In the illustrated example, the storage unit 200 extends from the left side 104 of the fuselage 102 toward the right side 106 of the fuselage 102.

As shown in FIG. 2, the storage unit 200 includes a first storage assembly 210 and a second storage assembly 212. In the illustrated example, the first storage assembly 210 includes a first compartment (not shown) accessible via a first door 214. The second storage assembly 212 includes a second compartment, a third compartment, a fourth compartment, and a fifth compartment (not shown). The second compartment is accessible via a second door 216, the third compartment is accessible via a third door 218, the fourth compartment is accessible via a fourth door 220, and the fifth compartment is accessible via a fifth door 222. In other examples, the storage unit 200 may have any suitable number of compartments and/or doors. The example compartments may be used to store and/or retain any item(s) such as, for example, garments (e.g., coats, jackets, hats, and/or any other garment), safety equipment (e.g., fire extinguishers, first aid kits, and/or any other safety equipment), supplies (e.g., blankets, paper towels, soap, food, and/or any other supplies) and/or any other items. In some examples, shelving, brackets, racks (e.g., a coat rack), dividers, padding and/or any other structures and/or devices to hold, support, organize and/or protect the items are disposed in the compartments.

In the illustrated example, the doors of the first storage assembly 210 and the doors of the second storage assembly may include hinges 223 to enable the doors to swing in an open direction. The hinges 223 may be a continuous hinge, a piano hinge, or any other suitable type of hinge. As shown in Figure 2, hinges 223A and 223B are coupled to the frame of the second storage assembly 212 and to the respective ends of the fourth door 220 and the fifth door 222, respectively. The hinges 223A and 223B enable the fourth door 220 and the fifth door 222 to open away from the left side 104 and/or the entranceway 202 of the fuselage 102 (e.g., the fourth door 220 and the fifth door 222 open into and/or toward the right side 106 of the fuselage 102 and/or the passenger seating area), thereby facilitating access to the fourth compartment and the fifth compartment and enabling the passengers and/or the crew to close the fourth door 220 and/or the fifth door 222 as the passengers and/or the crew exit the aircraft 100 from the passenger seating area. In the illustrated example, the hinges 223A and 223B enable the fourth door 220 and the fifth door 222, respectively, to pivot about an axis that is substantially vertical and/or perpendicular to the floor. In other examples, the fourth door 220 and the fifth door 222 may open in other directions.

As showing in Figure 2, the hinges 223 may include one or more door stop apparatus 230 for limiting the opening movement of the doors of the first and second storage assemblies 210 and 212. For example, the doors may be rotatable in an opening direction until the door contacts the door stop apparatus 230. The door stop apparatus 230 may be coupled to or attached to the hinges 223 at one or more locations along the hinges 223. For example, the door stop apparatus 230 may prevent the first door 214 of the first storage assembly 210 from opening beyond a predetermined angle. Similarly, the door stop apparatus 230 may prevent the doors of the second storage assembly 212 from opening beyond predetermined angles. The door stop apparatus 230 may be configured to limit the opening of the doors of the second storage assembly 212 to the same or different angles.

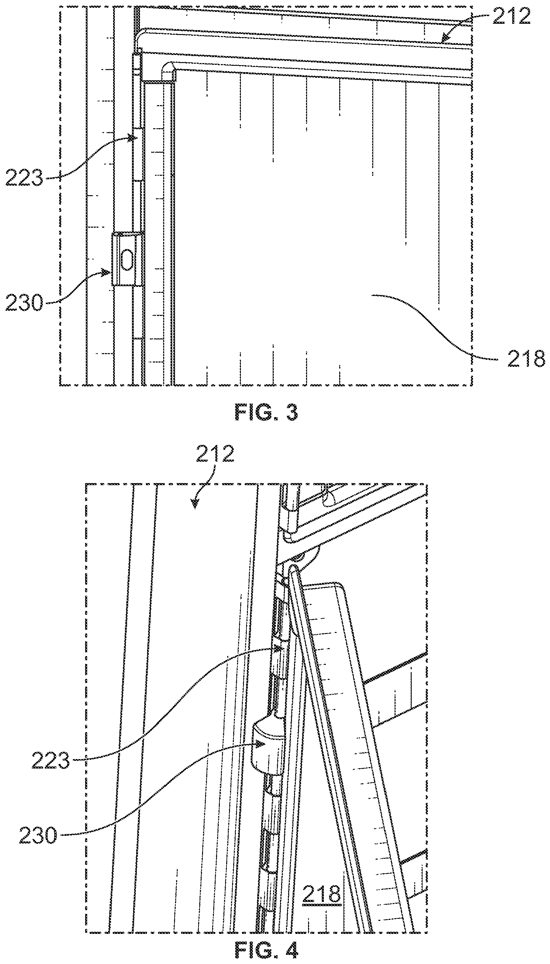

As shown in Figure 3, the door stop apparatus 230 is coupled to the hinge 223 of the third door 218 of the second storage assembly 212 disposed in a closed position. FIG. 4 shows the door stop apparatus 230 coupled to the hinge 223 of the third door 218 disposed at a maximum opening position as limited by the door stop apparatus 230. Further, each of the doors of the first and second storage assemblies 210 and 212 may include a latch 240 to secure the doors in a closed position and facilitate opening and closing of the doors. The latches 240 may be disposed at any location on the doors (e.g., operatively coupled to the doors) of the first and second storage assemblies 210 and 212.

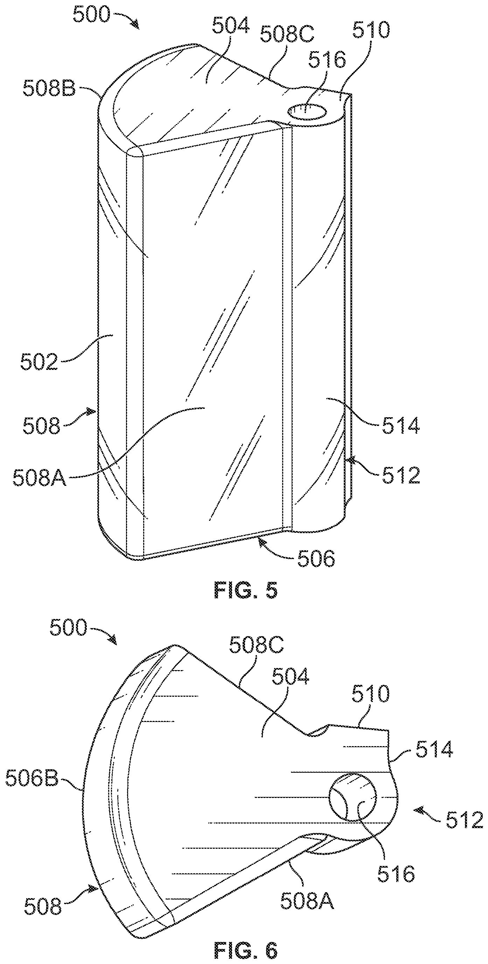

Referring now to Figures 5 and 6, a door stop apparatus 500 for a hinge mounted door is illustrated, in accordance with an exemplary embodiment. The door stop apparatus 500 can be used to limit the degree or range of rotation of the door in an opening direction. For example, the door stop apparatus 500 may limit the door from opening beyond a predefined or predetermined angle. As a result, the door stop apparatus 500 can prevent the door from swinging into or contacting adjacent structures (e.g., walls, door frames, trim, or other objects), thereby avoiding collisions between the door and adjacent structures that may cause unwanted damage. Therefore, the door stop apparatus 500 may protect the door and/or adjacent structures from undesired forces and/or damage when the door is opened.

As shown in Figure 5, the door stop apparatus 500 generally comprises a body member or structure 502 and may be formed as a single piece construction. The door stop apparatus 500 may have a generally or substantially triangular or wedge shape. It is contemplated that alternate embodiments of the door stop apparatus 500 may have other various geometric shapes, both regular and irregular, such as cylindrical or rectangular configurations. The door stop apparatus 500 can be pre-installed or pre-assembled on a door hinge thereby decreasing installation time.

The door stop apparatus 500 may be of a relatively simple construction and may be fabricated from a single piece of light weight material having any desired height or thickness. The door stop apparatus 500 may be fabricated from a number of materials, including, but not limited to, metal, rubber, ceramic, steel, aluminum, plastic (e.g., nylon, polyamide polyester, polyphenylene sulfide, polyethylene, or polypropylene), or any other suitable material or combination thereof. The door stop apparatus 500 may be constructed using any suitable manufacturing processes, such as, for example, injection molding and/or or a milling process. In some embodiments, the door stop apparatus 500 may be formed from an extruded material, cut to a desired height or length, and slotted as desired.

As shown in Figure 5, the door stop apparatus 500 may include a top surface 504, a bottom surface 506, one or more side surfaces 508, an abutment or hinge-engagement surface 510, and a collar or sleeve portion 512. The top surface 504 and the bottom surface 506 may be substantially planar and have a substantially triangular or wedge shape. The collar or sleeve portion 512 may include a housing configured as a hinge-receiving portion 514. The hinge-receiving portion 514 may define a circular opening or bore 516 extending there-through. As an alternative, the hinge-receiving portion 514 may be a blind hole. The circular opening 516 may be adapted to receive or accommodate a shaft (e.g., hinge pin) of a door hinge. The shaft or hinge pin of the door hinge may be positioned through the circular opening 516 of the hinge-receiving portion 514. The circular opening 516 may have any suitable size diameter to accommodate the hinge pin of the door hinge.

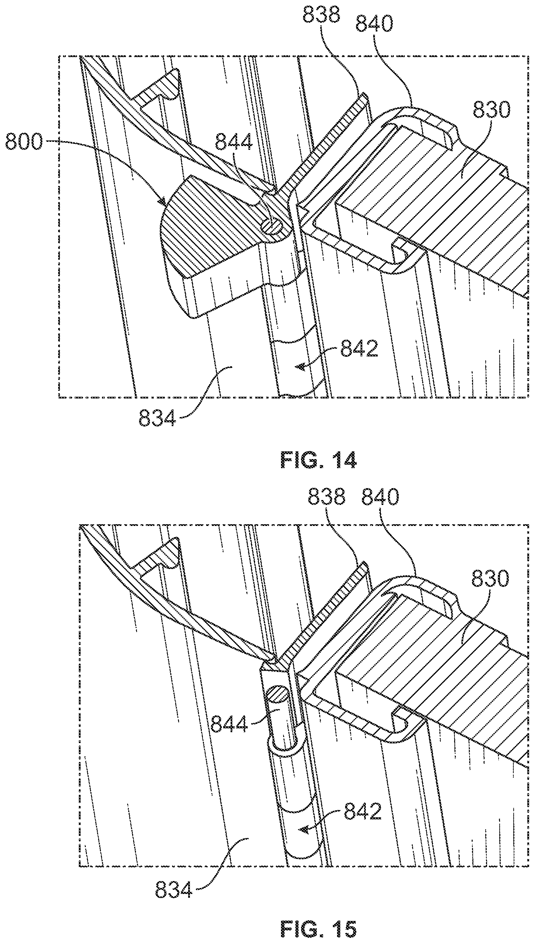

The hinge-engagement surface 510 of the door stop apparatus 500 may be configured to engage or interface with the door hinge to prevent axial or rotational movement of the door stop apparatus 500 about the door hinge (See, e.g., Figures 14 and 15). For example, the hinge-engagement surface 510 may abut or engage a surface of the door hinge to maintain the door stop apparatus 500 in a substantially fixed positioned relative to the door hinge. Thus, the door stop apparatus 500 may stop or limit the opening movement of the door at a predetermined angle by only engaging with the door hinge and without contacting adjacent structures. The hinge-engagement surface 510 may be substantially planar and have a substantially rectangular shape. In other embodiments, the hinge-engagement surface 510 may have a curved or other shape for engaging a surface of the door hinge to prevent rotational movement of the door stop apparatus 500 about the door hinge.

As shown in Figure 5, the side surfaces 508 of the door stop apparatus 500 include a first side surface 508A, a second side surface 508B, and a third side surface 508C. The first side surface 508A and third side surface 508C may be substantially planar and have a rectangular shape. The second side surface 508B may be curved and extend between the first side surface 508A and the third side surface 508C. In other embodiments, the shape or contour of the side surfaces 508 may have any suitable configuration.

The first side surface 508A of the door stop apparatus 500 may act as a bumper to absorb the forces from impacts from the door and to prevent the surface of the door from being damaged. In some embodiments, the first side surface 508A may include a protective material or layer. In other embodiments, the first side surface 508A may include a bumper member or protective pad (not shown) as further described below. The bumper member may be integral with the door stop apparatus 500 or secured to the door stop apparatus 500. The bumper member may have cylindrical shape or any other suitable shape. In some embodiments, the first side surface 508A may include one or more protrusions upon which the bumpers may be mounted.

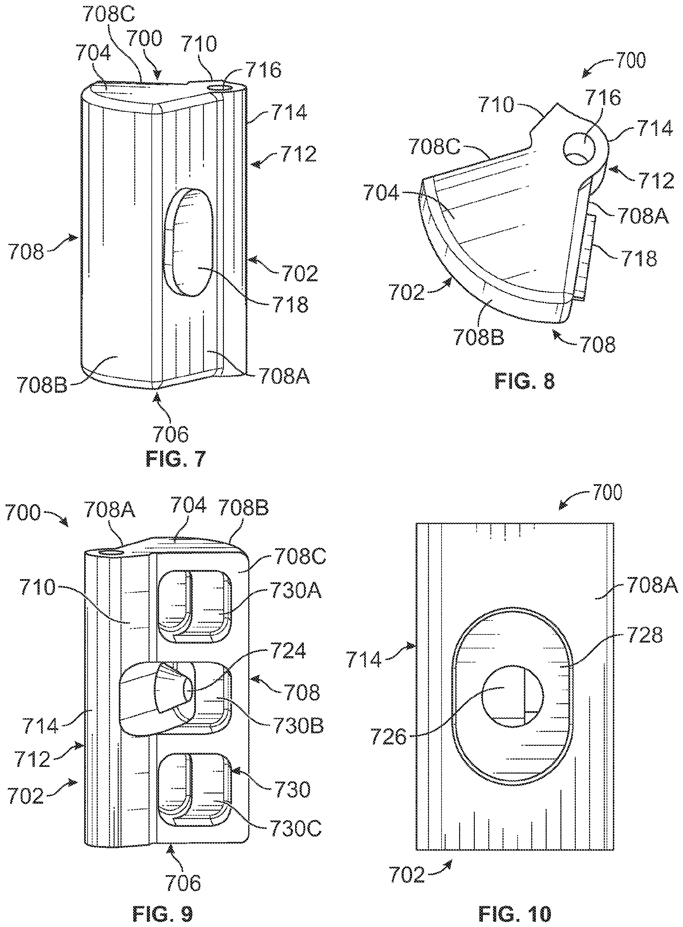

Referring now to Figures 7-10, a door stop apparatus 700 for a hinge mounted door is illustrated, in accordance with an exemplary embodiment. The door stop apparatus 700 may, in many respects, correspond in construction and function to the previously described door stop apparatus of Figure 5. Components of the door stop apparatus 700 which generally correspond to those components of the door stop apparatus 500 are designated by like reference numbers in the seven-hundred series.

As shown in Figure 7, the door stop apparatus 700 generally comprises a body member or structure 702. The body member 702 of the door stop apparatus 700 may include a top surface 704, a bottom surface 706, one or more side surfaces 708, an abutment surface or hinge-engagement surface 710, and a collar or sleeve portion 712. The collar or sleeve portion 712 may include a housing configured as a hinge-receiving portion 714. The hinge-receiving portion 714 may define a circular opening or bore 716 extending there-through. In an alternative embodiment, the hinge-receiving portion 714 may be a blind hole.

The body member 702 of the door stop apparatus 700 may also include a bumper member 718. The bumper member 718 may be coupled or secured to the body member 702 of the door stop apparatus 700. In some embodiments, the bumper member 718 may be detachably coupled to the body member 702. The bumper member 718 may be configured to absorb the impact of a door and to protect the surface of the door from being damaged. The bumper member 718 may be composed of rubber, plastic, foam, carbon fiber, polymer, synthetic material, polyurethanel, or any other suitable material or combinations thereof.

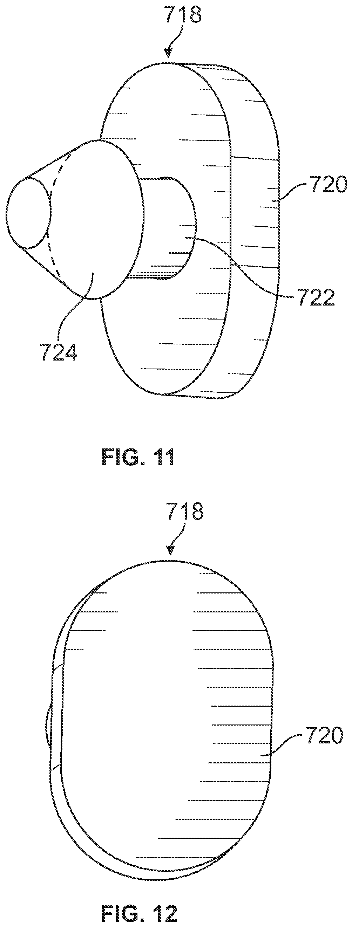

Figure 11 shows an exemplary embodiment of the bumper member 718 of the door stop apparatus 700. As shown in Figure 11, the bumper member 718 may include a head 720 and an elongated member or shaft 722. As shown in Figure 12, the head 720 is substantially cylindrically shaped. It will be recognized that the shape of the head 720 may be triangular, rectangular, square, pentagonal, hexagonal, heptagonal, octagonal, round, oval, elliptical, n-sided, or any other shape. The shaft 722 may extend longitudinal from the head 720 of the bumper member 718 and have an enlarged end portion 724 for enabling the bumper member 718 to be detachably coupled to the door stop apparatus 700.

Referring again to Figures 7-10, the one or more side surfaces 708 of the door stop apparatus 700 may include a first side surface 708A, a second side surface 708B, and a third side surface 708C. As shown in Figure 10, the first side surface 708A of the door stop apparatus 700 includes an opening 726 to receive the shaft 722 of the bumper member 718 (shown in Figure 11) and a recessed portion 728 to receive the head 720 of the bumper member 718. As shown in Figure 9, the third side surface 708C includes one or more openings or recesses 730 (three being shown). The recesses 730 may formed in the door stop apparatus 700 to further reduce the weight of the door stop apparatus 700. The recesses 730 may be substantially cylindrically or rectangularly shaped and may be formed by a milling process. The recesses 730 may include an upper recess 730A, a middle recess 730B, and a lower recess 730C. The middle recess 730B may enable the enlarged end portion 724 of the bumper member 718 to expand for securing the bumper member 718 to the door stop apparatus 700.

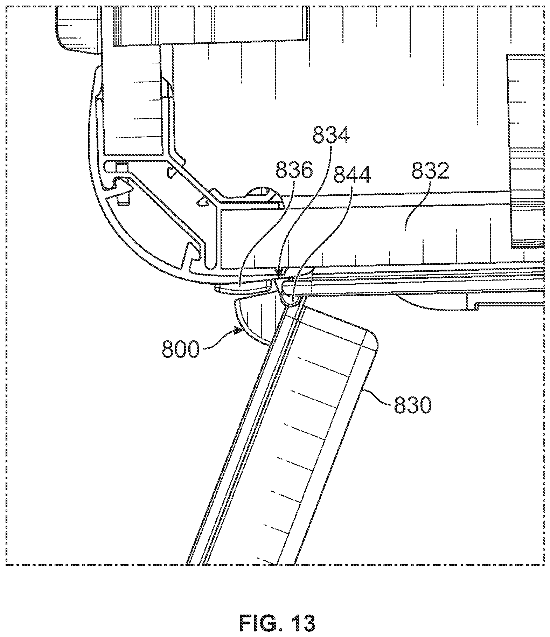

Referring to Figure 13-15, a door stop apparatus 800 coupled or attached to a hinge assembly is illustrated, according to an exemplary embodiment. The door stop apparatus 800 is designed to limit the opening movement of a hinge mounted door. The door stop apparatus 800 may, in many respects, correspond in construction and function to the previously described door stop apparatus 700 of Figure 7. Components of the door stop apparatus 800 which generally correspond to those components of the door stop apparatus 700 are designated by like reference numbers in the eight-hundred series.

As shown in Figure 13, the door 830 is rotatably secured to a support or door frame 832 by a hinge assembly 834. The hinge assembly 834 may be a continuous hinge, a piano hinge, or any other suitable hinge. Trim or a molding strip 836 (e.g., a vertical rub strip) may be secured to the support 832 adjacent to the door 830. The hinge assembly 834 may have a hinge plate 838 coupled to the support 832 and a hinge plate 840 coupled to the door 830 as shown in Figure 14. The hinge assembly 834 may include axially aligned hinge barrels 842. In order to secure the hinge barrels 842 in their relative positions and for relative angular displacement, a hinge pin 844 may be positioned through the hinge barrels 842. The door 830 may be rotatable about the axis of the hinge pin 844. Figure 14 shows the door stop apparatus 800 mounted on the hinge assembly 834 when the door 830 is in a closed position. Figure 15 shows the hinge assembly 834 with the door stop apparatus 800 removed.

The opening movement of the door 830 may be limited by the engagement between the door stop apparatus 800 and the door 830. For example, as the door 830 is opened, the door 830 rotates until the outer surface of the door 830 comes into contact with a surface of the door stop apparatus 800 or a bumper member of the door stop apparatus 800. Figure 13 shows the door stop apparatus 800 mounted on the hinge assembly 834, with door 830 open as far as the door stop apparatus 800 will permit. When stopping the opening movement of the door 830, there is no part of door stop apparatus 800 that comes into contact with the trim 836 or the support 832 as described above.

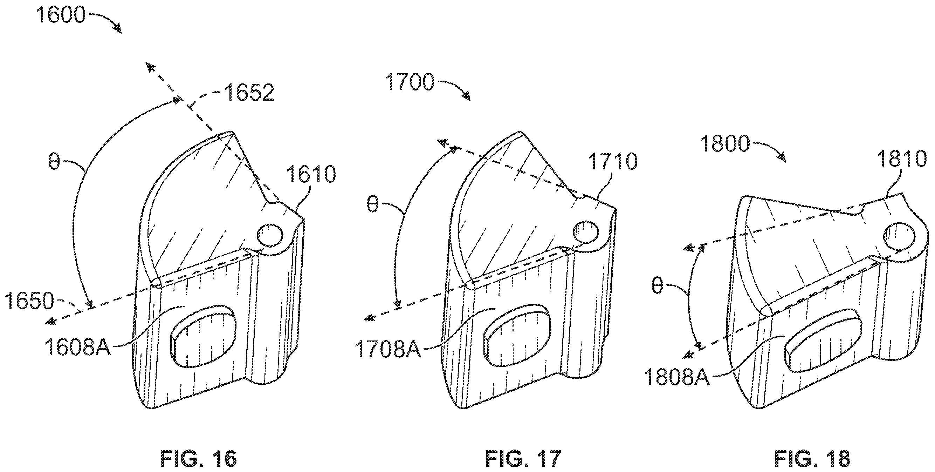

Referring to Figures 16-18, other embodiments of door stop apparatus for hinge mounted doors are illustrated. The door stop apparatus may be fabricated in various configurations for limiting the opening movement of the door to different desired angles. For example, the door stop apparatus may limit the opening of the door to any suitable angle. In some embodiments, the suitable angle may be between 90 to 140 degrees. The door stop apparatus shown in Figures 16-18 may, in many respects, correspond in construction and function to the previously described door stop apparatus 500 of Figure 5 or the door stop apparatus 700 of Figure 7. Components of the door stop apparatus 1600 of Figure 16 which generally correspond to those components of the door stop apparatus 700 are designated by like reference numbers in the sixteen-hundred series.

As shown in Figure 16, the hinge-engagement surface 1610 of the door stop apparatus 1600 can be oriented at a predetermined angle to engage or interface with a surface of a door hinge. Based on the orientation of the hinge-engagement surface 1610, the door stop apparatus 1600 may have an angle θ between an imaginary line 1650 extending through the first side surface 1604 of the door stop apparatus 1600 and an imaginary line 1652 extending through the hinge-engagement surface 1610 so that the opening of a hinge mounted door may be limited to a desired angle. The door stop apparatus 1600 may limit the opening of a door to about 90 degrees.

Figure 17 shows a door stop apparatus 1700 for limiting the opening of a hinge mounted door to 110 degrees. The door stop apparatus 1700 may be configured have a particular orientation relative to the door hinge to form a predetermine angle θ between the first side surface 1708A and the hinge-engagement surface 1710. Figure 18 shows a door stop apparatus for limiting the opening of a hinge mounted door to 130 degrees based on the angle θ between the first side surface 1808A and the hinge-engagement surface 1810.

In summary, the present application relates to embodiments of door stop apparatus for hinge mounted doors. The door stop apparatus may limit the door from opening beyond a predefined or predetermined angle. For example, the door stop apparatus may be fabricated with various configurations for limiting the opening of the door to different desired angles. Further, the door stop apparatus may be configured to stop the movement of the door at a desired position without contacting or applying pressure to the adjacent structures. As such, the door stop apparatus may only contact the door hinge to limit the opening movement of the door. As a result, the door stop apparatus can prevent the door from swinging into or contacting adjacent structures (e.g., walls, door frames, trim, or other objects), thereby avoiding collisions between the door and adjacent structures that may cause unwanted damage. Therefore, the door stop apparatus may protect the door and/or adjacent structures from undesired forces and/or damage when the door is opened.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples describe different advantages as compared to other advantageous examples. The example or examples selected are chosen and described in order to best explain the principles of the examples, the practical application, and to enable others of ordinary skill in the art to understand the disclosure for various examples with various modifications as are suited to the particular use contemplated.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

By the term "substantially" and "about" used herein, it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

While apparatus has been described with reference to certain examples, it will be understood by those skilled in the art that various changes can be made and equivalents can be substituted without departing from the scope of the claims. Therefore, it is intended that the present apparatus not be limited to the particular examples disclosed, but that the disclosed apparatus include all embodiments falling within the scope of the appended claims.

## Claims

1. A door stop apparatus (500, 700, 800, 1600, 1700, 1800) adapted to be coupled to a hinge pin of a door hinge for limiting opening movement of a door, the door stop apparatus comprising:
a body member (502, 702) comprising:
a first end surface (504, 704);
a second end surface (506, 706) opposite to the first end surface;
a housing (516, 716) extending between the first end surface and the second end surface, wherein the housing is configured to receive the hinge pin of the door hinge;
an abutment surface (510, 710) extending between the first end surface and the second end surface, wherein the abutment surface is configured to abut against the door hinge for maintaining the body member in a substantially fixed position relative to the door hinge; and
a first side surface (508A, 708A) extending between the first end surface and the second end surface.

2. The door stop apparatus of claim 1, wherein the first end surface (504, 704) and the second end surface (506, 706) are parallel.

3. The door stop apparatus of claim 1 or claim 2, further comprising a bumper member (718) disposed on the first side surface of the body member, wherein the bumper member is configured to absorb an impact from the door.

4. The door stop apparatus of any of claims 1-3, wherein the first end surface and the second end surface are substantially triangularly shaped, and wherein the first end surface and the second end surface are substantially planar.

5. The door stop apparatus of any of claims 1-4, wherein the body member is made from a single piece of rigid material selected from at least one of metal, steel, aluminum, plastic, rubber, ceramic, polyester, nylon, polyamide, polyethylene, or polypropylene.

6. The door stop apparatus of any of claims 1-5, wherein the first side surface and the abutment surface are substantially planar surfaces.

7. The door stop apparatus of any of claims 1-6, wherein the first side surface and the abutment surface are angularly spaced apart from each other to limit the opening of a door beyond a particular angle.

8. The door stop apparatus of claim 7, wherein the particular angle comprises a 90 degree angle, a 100 degree angle, or a 140 degree angle.

9. The door stop apparatus (500, 700, 800, 1600, 1700) of any of claims 1-8, wherein the first side surface includes a recess (726) therein, and wherein the recess is configured to receive a shaft (722) of a bumper member.

10. The door stop apparatus of claim 9, wherein the bumper member comprises a head portion (720) and a shaft (722) extending longitudinally from the head portion.

11. The door stop apparatus of claim 10, wherein the head portion (720) has a substantially cylindrical shape, and wherein the head portion is positioned approximately midway between said first end surface and said second end surface.

12. The door stop apparatus of any of claims 1-11, wherein the body member includes a second side surface (508B, 708B) extending between the first end surface and the second end surface, and wherein the second side surface is curved.

13. The door (830) stop apparatus of any of claims 1-12, wherein the body member includes a third side surface (508C, 708C) extending between the first end surface and the second end surface, wherein the third side surface is substantially planar.

14. Modular component like a cabinet or storage unit of an aircraft (100), having a hinge mounted door, wherein it further comprises a door stop apparatus of any of claims 1-13.

15. The modular component of claim 14, wherein the door stop apparatus comprises a bumper member disposed on the body member, wherein the bumper member is configured to absorb impact from the door, and wherein door stop apparatus limits opening movement of the door without contacting adjacent structures other than the door hinge.
